Europäisches Patentamt

European Patent Office

Office européen des brevets

(11) Publication number: **0 001 334**

A1

# EUROPEAN PATENT APPLICATION

(21) Application number: 78300335.3

(22) Date of filing: 01.09.78

(51) Int. Cl.²: **H 02 K 37/00**
G 04 C 13/10, H 02 K 21/18

(30) Priority: 07.09.77 JP 107484/77

(43) Date of publication of application:
04.04.79 Bulletin 79/7

(84) Designated contracting states:
CH DE FR GB

(71) Applicant: KABUSHIKI KAISHA SUWA SEIKOSHA
4-3-4, Ginza Chuo-ku
Tokyo(JP)

(72) Inventor: Okazaki, Sakiho
3-3-5, Owa
Suwa-shi Nagano-ken(JP)

(72) Inventor: Kawamura, Yoshikazu
3-3-5, Owa
Suwa-shi Nagano-ken(JP)

(74) Representative: Miller, Joseph
J. MILLER & CO. Lincoln House 296-302 High Holborn
London WC1V 7JH(GB)

(54) Transducer for an electronic timepiece.

(57) A transducer, e.g. a stepping motor, for an electronic timepiece comprises a permanently magnetised rotor (1) having at least two poles (N,S); a stator (2, 3) having an internal surface (20) radially inwardly of which the rotor (1) is disposed and from which it is spaced, the stator (2,3) being made of an highly permeable magnetic material and being magnetically coupled to the rotor (1); and a coil (4) magnetically coupled to the stator (2, 3).

In order to reduce power consumption it is arranged that
$$0.6 > Rr/Sr > 0.3, \text{ and } 1.5 > Rt/St \geq 0.8$$
where $Rr$ is the maximum distance of any point on the external surface of the rotor (1) from the axis (21) of the rotor (1), $Sr$ is the minimum distance of any point on the internal surface (20) of the stator (2, 3) from the axis (21) of the rotor (1), and $Rt$ and $St$ are the axial thicknesses of the rotor (1) and stator (2, 3) respectively.

Fig 1

- 1 -

"TRANSDUCER FOR AN ELECTRONIC TIMEPIECE"

This invention concerns a transducer, e.g. a stepping motor, for an electronic timepiece, e.g. a quartz crystal analogue wrist watch, comprising a permanently magnetised rotor having at least two poles;  a stator having an internal surface radially inwardly of which the rotor is disposed and from which it is spaced, the stator being made of an highly permeable magnetic material and being magnetically coupled to the rotor;  and a coil magnetically coupled to the stator.

In a quartz crystal analogue wrist watch or other timepiece in which mechanically driven display hands and the like are used to indicate the seconds, minutes and hours, and in which a quartz crystal oscillator is used as a time standard, it is very important that the time standard should be extremely accurate, that the accuracy of the quartz crystal oscillator is as good as possible, and that the life of a battery which is used to power the timepiece is as great as possible.  In such a timepiece, however, the power consumption of the electro-mechanical transducer which is used to drive the display hands is large as compared with that of the electrical circuit in which the said oscillator is connected, so that, if the battery life is to be extended, it is particularly necessary to improve the efficiency of this transducer and to reduce its power consumption.  Previous attempts have been made to reduce the power consumption of this transducer, but it is nevertheless desirable to reduce its power consumption still more than has previously been achieved.

According therefore to the present invention there is provided a transducer for an electronic timepiece comprising a permanently magnetised rotor having at least two poles;  a stator having an internal surface radially inwardly of which the rotor is disposed and from which it is spaced, the stator being made of an highly permeable magnetic material and being magnetically coupled to the rotor;  and a coil magnetically coupled to the stator, characterised in that

$$0.6 > Rr/Sr > 0.3, \text{ and } 1.5 > Rt/St \geq 0.8,$$

where Rt is the maximum distance of any point on the external surface of the rotor from the axis of the rotor, Sr is the minimum distance of any point on the internal surface of the stator from the axis of the rotor, and Rt and St are the axial thicknesses of the rotor and stator respectively.

The efficiency of a transducer according to the present invention is greater than that of a conventional transducer while its power consumption is reduced.

Preferably, the maximum energy output (BH max) of the rotor is at least 20 MGOe.

The rotor may be made, at least in part, of $Sm_2 (Co, Fe, Cu, Zr)_{17}$.

Preferably $Rr/Sr \geq 0.4$.

Moreover it is preferred that $0.55 \geq Rr/Sr \geq 0.45$.

It is also preferred that $1.25 \geq Rt/St \geq 1.0$.

The stator may be an integral stator having two major portions which are interconnected by radially thin portions.

Alternatively, the stator may have two portions which are separated from each other by small gaps.  The rotor may if desired be a part-cylindrical rotor.

The internal surface of the stator may be provided with notches which ensure that, in operation, the rotor rotates in one angular direction only.

The internal surface of the stator is preferably substantially cylindrical and is concentric with the axis of the rotor.

The transducer may be a stepping motor.

The invention is illustrated, merely by way of example, in the accompanying drawings, in which:-

Figure 1 shows a two pole stepping motor for a quartz crystal analogue timepiece according to the present invention;

Figure 2 is a broken-away cross-sectional view of the motor shown in Figure 1;

Figure 3 illustrates the waveform of a driving pulse which is applied to a coil of the motor shown in Figure 1;

Figure 4 is a graph showing the relationship between the output torque (T) required to rotate the minute hand of a timepiece provided with a motor as shown in Figure 1 and the ratio Rr/Sr;

Figure 5 is a graph showing the relationship between the current consumption (i) of a motor as shown in Figure 1 and the ratio Rr/Sr;

Figure 6 is a graph showing the relationship between the current consumption (i) of a motor as shown in Figure 1 and the ratio Rt/St;

Figures 7(a) and (b) illustrate the distribution of magnetic flux between the rotor and the stator of a known motor and of a motor according to the present invention respectively;

Figure 8 is a diagrammatic view illustrating a modified stator which may be employed in the motor of Figure 1; and

Figure 9 is a diagrammatic view illustrating a modified rotor which may be employed in the motor of Figure 1.

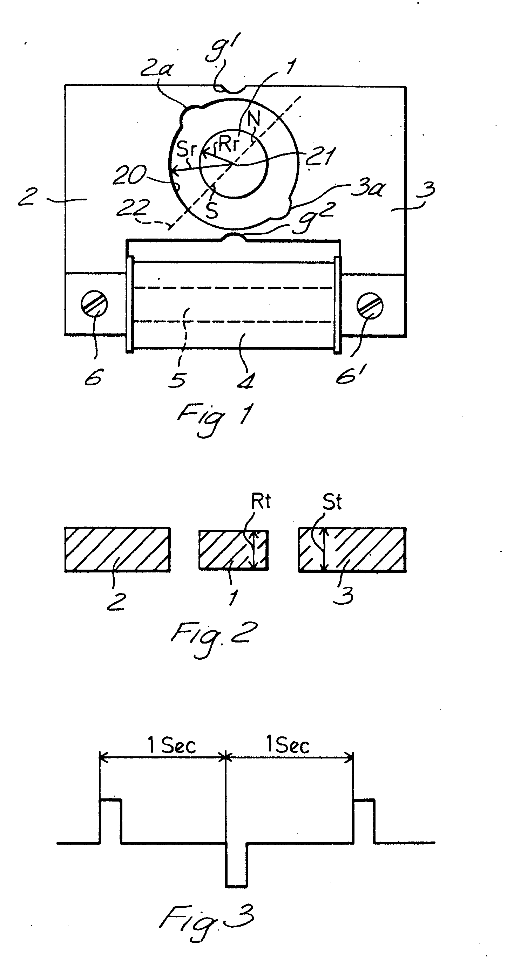

In Figures 1 and 2 there is shown a stepping motor for use in a quartz crystal analogue wrist watch. The motor comprises a permanently magnetised rotor 1 having two peripherally disposed diagrammatically spaced apart poles respectively marked N, S. The motor also has an integral stator which comprises two major portions 2, 3 which are interconnected by radially thin portions $g^1$ and $g^2$. The stator 2, 3 has an internal surface 20 which is substantially cylindrical in shape and is concentric with the axis 21 of the rotor 1, the rotor 1 being disposed radially inwardly from and being spaced from the internal surface 20. The stator 2, 3 is made of a highly permeable magnetic material and is magnetically coupled to the rotor 1.

The stator portions, 2, 3 are respectively fixed by means of screws 6, 6' to a yoke 5, there being wound about the yoke 5 a coil 4 to which each of the stator portions 2, 3, is magnetically coupled.

The stator portions 2, 3 are respectively provided with notches 2a, 3a in the internal surface 20 of the stator, the notches 2a, 3a ensuring that, in operation, the rotor 1 rotates in one angular direction only.

When the parts are at rest, the magnetic poles N, S of the rotor 1 are disposed adjacent the poles (not shown) of the stator 2, 3. Thus the broken line 22 in Figure 1 illustrates one rest position of the poles N, S of the rotor 1.

As explained in greater detail below, it is arranged that $0.6 > Rr/Sr > 0.3$, and that $1.5 > Rt/St \geq 0.8$, where Rr is the maximum distance of any point on the external surface of the rotor from the axis 21 of the rotor, Sr is the minimum distance of any point on the internal surface 20 of the stator 2, 3 from the axis 21 of the rotor, and Rt and St are the axial thicknesses of the rotor 1 and stator 2, 3 respectively.

In the particular stepping motor shown in Figures 1 and 2, in which a wholly cylindrical rotor 1 is employed, and in which the internal surface 20 is concentric with the axis 21, it will be appreciated that the distance Rr is equivalent to the radius of the rotor, and that the distance Sr is equivalent to the radius of the internal surface 20.

The dimensions Rt and St referred to above are shown in Figure 2, from which it will be seen that the axial thickness Rt of the rotor 1 is less than that of the stator 2, 3, the rotor 1 being arranged axially midway of the stator 2, 3.

Figure 3 shows the waveform of a driving voltage which, in operation, is applied to the coil 4. This waveform has what is known as inversion pulses, namely positive and negative pulses which are applied alternately at one second intervals. These pulses generate N, S poles in the stator portions 2 and 3 and, as a result, the poles N, S of the rotor 1 are respectively magnetically repelled and attracted by the stator poles, so that the rotor 1 rotates through $180^{\circ}$ at each pulse. By reason of the provision of the inversion pulses, the polarity of the stator 2, 3, is periodically changed, and the rotor 1 is therefore driven in one consistent angular direction.

It has previously been assumed that, in the case of a stepping motor of the kind shown in Figures 1 and 2, it was desirable to arrange that $0.6 \leq Rr/Sr \leq 0.9$ in order to achieve low power consumption. In fact, in the most recent stepping motors of this kind, the ratio Rr/Sr has been in the range 0.65 to 0.7. In such known stepping motors, however, a permanently magnetised rare earth cobalt magnetic rotor 1 was used whose maximum energy output (BH max) was 10 to 15 MGOe.

Improved magnetic material has, however, recently become available such as $Sm_2(Co, Fe, Cu, Zr)_{17}$, and the optimum aging treatment of this magnetic material has been improved, with the result that precipitate-hardened five element magnets having a BH max of 30 MGOe have become available. The latter magnets are superior to conventional $SmCo_5$ magnets and are neither more expensive nor more difficult to manufacture. For this reason, the rotor 1 is made at least in part of $Sm_2(Co, Fe, Cu, Zr)_{17}$, and has a maximum energy output (BH max) of at least 20 MGOe, and preferably 30 MGOe.

In the case of the present invention, the axial thickness Rt of the rotor 1 is greater than in the prior art with the result that the ratio Rr/Sr is less than 0.6. Therefore the efficiency of the motor can be greatly improved as compared with a conventional motor and its power consumption can be decreased.

The ratio Rr/Sr has conventionally had to be 0.6 or more for the reason illustrated in Figure 4. The curve B in Figure 4 illustrates the conventional relationship, in the case where the rotor 1 is made of a conventional material, between the output torque T required to effect rotation of the minute hand of a wrist watch and the ratio Rr/Sr. This output torque needs to be in the range 3.5 to 4 g.cm and this has necessitated making the ratio Rr/Sr at least 0.6. However, if a strong magnet, e.g. one where BH max = 20 to 30 MGOe, is employed, and the rotor is increased in thickness, then the relationship between T and Rr/Sr will be shown in the curve A in Figure 4. As will be seen from the curve A, a sufficient output torque can be obtained even where Rr/Sr is less than 0.6. Of course if the ratio Rr/Sr is equal to or exceeds 0.6, a much greater output torque can be obtained, but this increased output torque is also associated with relatively high power consumption because the current consumption then also increases.

In Figure 5 there is shown a graph illustrating the relationship between the current consumption (i) and the ratio Rr/Sr. The curves C, D illustrated in Figure 5 have been obtained

- 6 -

0001334

on the basis that BH max = 30, Rt/St = 1.0, and that the notches 2a, 3a in the stator portions 2, 3 have been adjusted so as to have areas most suitable for efficiency.

The curve C in Figure 5 shows the values of the current consumption $i$ in the case in which the output torque T is 3.5 g.cm. As will be obvious from examining the curve C, the current consumption is reduced when the ratio Rr/Sr is less than 0.6 and more particularly in the range 0.4 to 0.6, the preferred ratio Rr/Sr being 0.45 to 0.55. The current consumption $i$, however, increases when the ratio Rr/Sr decreases too much, i.e. beyond about 0.4.

Since the notches 2a, 3a in the stators 2, 3 must be reduced in size if the ratio Rr/Sr is increased, small differences in the shapes of the stator have a considerable influence upon the performance of the motor. This is so because, as the area of the notches is only about 0.5% of the area of the internal surface 20 of the stator 2, 3, even a small difference in the shape of the rotor affects the ratio of the notch area to the area of the internal surface 20.

The curve D in Figure 5 shows the values of the current consumption $i$ in the case in which the output torque T is almost zero, i.e. the curve D indicates the minimum current required to start the motor. As will be seen from curve D, the value of this starting current is reduced right up to a ratio Rr/Sr of 0.3. When, however, Rr/Sr becomes less than 0.3 the required starting current increases.

Curve D shows that the larger the ratio Rr/Sr, the more the starting current increases, especially when the ratio Rr/Sr is at least 0.6 to 0.7, after which the starting current increases rapidly. This arises from the fact that there is a consequential increase at this stage of the inertia of the rotor, since this inertia varies in proportion to the fourth power of the radius.

It is undesirable, if reliability is to be achieved, that the value of the starting current should be large. That is to say, if there is little difference between the starting current D and the actual current which one can obtain at the starting torque of 3.5 g.cm. a little change of input energy results in a large change of output torque. For example, the output torque rapidly decreases even when the battery voltage decreases only slightly, and when this happens the rotor stops. This is particularly inconvenient in a case where the output energy of the motor changes according to the load, such as a motor controlled by the pulse width of the current.

The relationship between the axial thickness of the rotor Rt and that of the stator St is illustrated in Figure 6 which is a graph showing the relationship of the current consumption $i$ to the ratio Rt/St. Figure 6 shows how the current consumption $i$ changes when the thickness of the rotor is changed, i.e. when the ratio Rt/St is changed, without changing other factors such as Rr, Sr, etc. The curve F shows the current consumption $i$ when the output torque T is 3.5 g.cm, while the curve G shows the minimum current required to effect starting.

The smaller the ratio Rt/St, the more the current consumption F increases when the output torque is 3.5 g.cm. This is especially the case when Rt/St is less than 0.8, in which case the current consumption increases rapidly as the ratio Rt/St decreases.

On the other hand, the starting current G increases as the ratio Rt/St increases, although the slope of the curve G is gentle, i.e. the increase is not very marked. In view of these facts it is clear that a ratio Rt/St of more than 0.8 is desirable if low power consumption of the motor is to be achieved. Figure 6 shows values of the ratio Rt/St up to about 1.2, but obviously the ratio Rt/St can be increased beyond this, although there is little purpose in increasing its value beyond 1.5. Having regard to the desirability of making the timepiece thin, however, it is desirable that the ratio Rt/St should not exceed 1.2 or 1.25. It is thus preferred that the ratio Rt/St should be between 1.0 and 1.25.

Motors in accordance with the present invention can have their power consumption reduced by 15 to 20 per cent by comparison with comparable conventional motors where the ratio Rr/Sr $\geq$ 0.6, Rt/St = 0.7 to 0.8, and BH max of the rotor = 10 to 15. The current consumption of one of the conventional motors, whose output torque is 3.5 g.cm, is shown by the curve E in Figure 5, and it will be seen by comparing the curves E and C, both of which relate to an output torque of 3.5 g.cm, that the present invention represents a substantial improvement over the prior art. Thus the current consumption of a known stepping motor can be reduced only to about 1 µA, whereas that of a stepping motor of the present invention can be reduced to 0.8 µA or less.

Figures 7(a) and 7(b) respectively illustrate the distribution of the magnetic flux in the case of a conventional motor and in the case of a motor according to the present invention. As will be seen from Figure 7(a), in the case of the conventional stepping motor there is relatively little difference between the diameter of the external surface 12 of the rotor and the internal diameter 11 of the stator, so that the gap 10 therebetween is small. In the case of the motor of the present invention, as shown in Figure 7(b), there is a relatively large difference in the diameters of the internal surface 14 of the stator and the external surface 15 of the rotor, and thus there is a relatively large gap 16 therebetween.

One might imagine that this increase, in the case of the present invention, in the size of the gap between the rotor and the stator would not result in an improvement in the transducing efficiency of the motor. This is not however correct.

In the first place it should be remembered that if a motor according to the present invention is provided with a stator whose inner diameter is the same as that of a conventional motor, then the present invention enables the diameter of the rotor to be reduced in comparison with that of the conventional rotor, with the result that the inertia of the rotor is similarly reduced. If, however, this inertia is reduced, then the losses due to inertia in the course of the rotation of the rotor are likewise reduced, and the efficiency is therefore improved.

The motor of the present invention, however, is also more efficient because of the nature of the magnetic flux distribution between the rotor and the stator. Of course, as the total magnetic flux increases so the output torque of the motor also increases. However, as the total magnetic flux increases, the stronger becomes the magnetic forces of attraction between the rotor and the stator, and consequently the greater is the current consumption, since the motor must be driven in such a way as to overcome these forces of attraction. Since the magnetic forces of attraction affect the stability of the motor at the time of rest, these forces cannot be much reduced. Consequently the stepping motor is designed so as to keep the magnetic forces of attraction constant.

In the case of the conventional stepping motor shown in Figure 7(a), the gap 10 is small and consequently substantially the whole magnetic flux 13 acts as the magnetic forces of attraction between the stator and the rotor.

On the other hand, in the case of the construction according to the present invention shown in Figure 7(b), since the gap 16 is large, the magnetic flux 17 which acts as the magnetic force of attraction can be distinguished from the comparatively large magnetic flux 18 which merely leaves and returns to the rotor. Consequently, if the magnetic force of attraction of Figure 7(a) and that of Figure 7(b) are the same, the entire magnetic flux is much greater in the case of Figure 7(b) by reason of the fact that there is considerable magnetic flux 18 which comes from and returns to the rotor itself. Consequently, if the same driving force is applied to the motors of Figures 7(a) and (b), a much larger output will actually be achieved in the case of the motor of Figure 7(b). Similarly, if the outputs of both motors are arranged to be substantially the same, then the motor of the present invention can be driven by a smaller driving force, i.e. with lower power consumption, with the result that efficiency is improved.

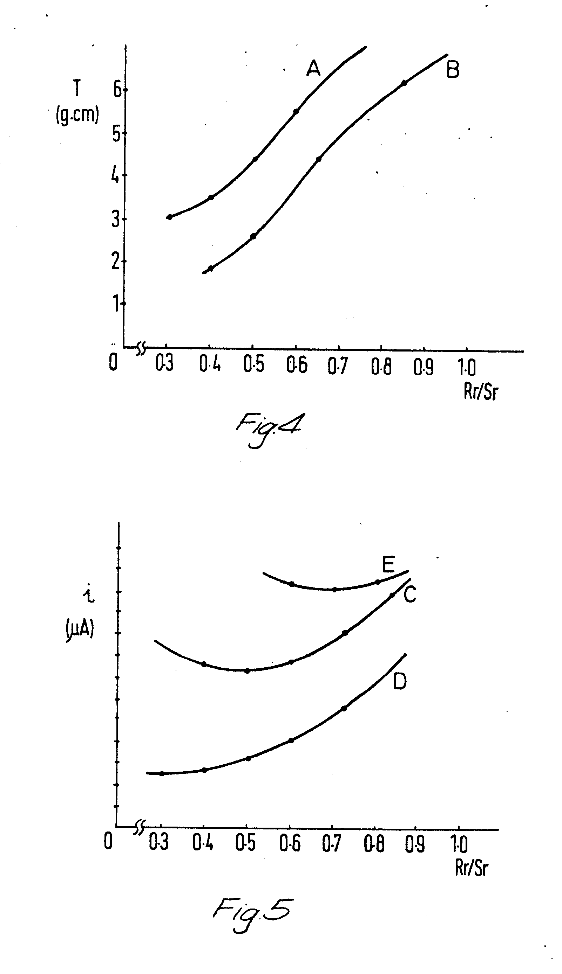

In Figure 8 there is illustrated part of a stepping motor according to the present invention which is generally similar to that of Figure 1 but in which there is employed a stator having two portions 23, 24 which are separated from each other by small gaps 25, 26. The stator portions 23, 24 have internal surfaces 27, 28 respectively which form portions of a cylindrical surface which is concentric with a cylindrical surface 30 of a rotor 31.

Thus, as will be appreciated from Figures 1 and 8, the stator may either be an integral stator having two major portions 2, 3 which are interconnected by radially thin portions $g^1$, $g^2$, or the stator may have two completely separate portions 23, 24 which are separated from each other by small gaps 25, 26.

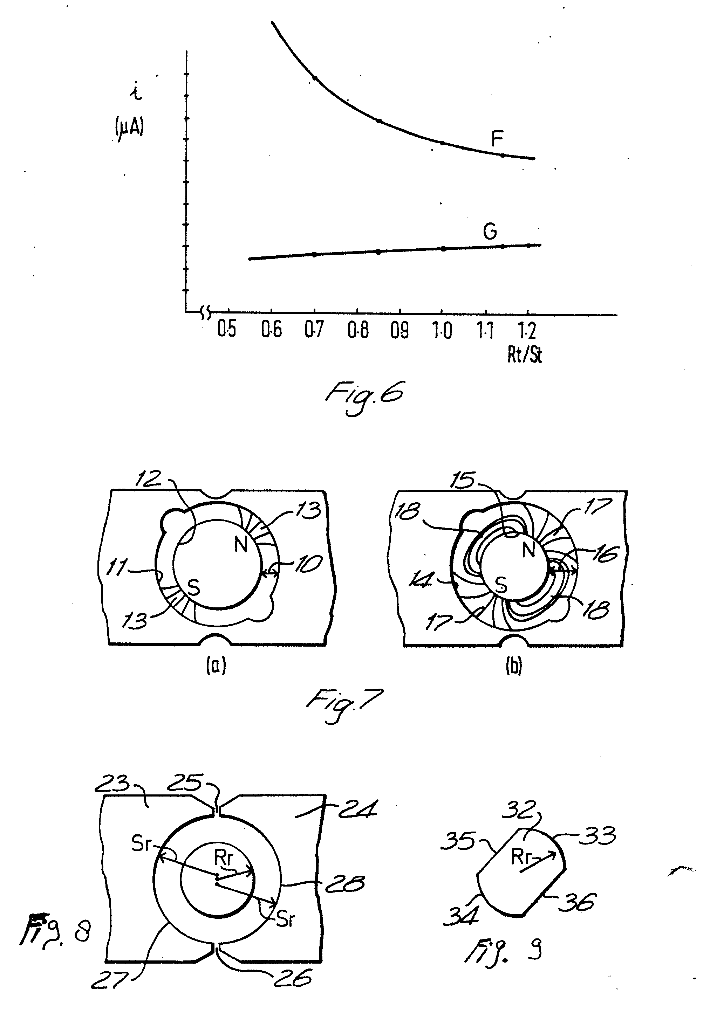

It is not essential that the rotor should be a completely cylindrical rotor. Thus, as shown in Figure 9 the motor of Figure 1 may be modified by being provided with a part-cylindrical rotor 32 having part-cylindrical surfaces 33, 34 and planar surfaces 35, 36.

CLAIMS

1.    A transducer for an electronic timepiece comprising a permanently magnetised rotor (1) having at least two poles (N,S); a stator (2, 3) having an internal surface (20) radially inwardly of which the rotor (1) is disposed and from which it is spaced, the stator (2, 3) being made of an highly permeable magnetic material and being magnetically coupled to the rotor (1); and a coil (4) magnetically coupled to the stator (2, 3), characterised in that

$$0.6 > Rr/Sr > 0.3, \text{ and } 1.5 > Rt/St \geq 0.8,$$

where Rr is the maximum distance of any point on the external surface of the rotor (1) from the axis (21) of the rotor (1), Sr is the minimum distance of any point on the internal surface (20) of the stator (2, 3) from the axis (21) of the rotor (1), and Rt and St are the axial thicknesses of the rotor (1) and stator (2, 3) respectively.

2.    A transducer as claimed in claim 1 in which the maximum energy output (BH max) of the rotor (1) is at least 20 MGOe.

3.    A transducer as claimed in claim 2 in which the rotor (1) is made at least in part of $Sm_2(Co, Fe, Cu, Zr)_{17}$.

4.    A transducer as claimed in any preceding claim in which Rr/Sr > 0.4.

5.    A transducer as claimed in any preceding claim in which $0.55 \geq Rr/Sr \geq 0.45$.

6.    A transducer as claimed in any preceding claim in which $1.25 \geq Rt/St \geq 1.0$.

7.    A transducer as claimed in any preceding claim in which the stator is an integral stator having two major portions (2, 3) which are interconnected by radially thin portions ($g^1$, $g^2$).

8.    A transducer as claimed in any of claims 1 to 6 in which the stator has two portions (23, 24) which are separated from each other by small gaps (25, 26).

9.    A transducer as claimed in any preceding claim in which the rotor is a part-cylindrical rotor (32).

10.   A transducer as claimed in any preceding claim in which the internal surface (20) of the stator (2, 3) is provided with

0001334

notches (2a, 3a) which ensure that, in operation, the rotor rotates in.one angular direction only.

11. A transducer as claimed in any preceding claim in which the internal surface (20) of the stator is substantially cylindrical and is concentric with the axis (21) of the rotor (1).

12. A transducer as claimed in any preceding claim in which the transducer is a stepping motor.

13. A transducer for an electronic timepiece comprising a permanently magnetised rotor (1) having at least two poles, a stator (2, 3) made of high permeability material and magnetically coupled to said rotor, and a coil (4) magnetically coupled to said stator (2, 3); characterized in that the radius (Rr) of said rotor (1) and the radius (Sr) of said stator (2, 3) have the relationship: $0.6 > Rr/Sr > 0.3$, and the thickness (Rt) of said rotor (1) and the thickness (St) of said stator (2, 3) have the relationship: $1.5 > Rt/St \geq 0.8$.

Fig 1

Fig. 2

Fig. 3

1 Sec    1Sec

Fig.4

Fig.5

Fig.6

(a)                                    (b)

Fig.7

Fig. 8

Fig. 9

## DOCUMENTS CONSIDERED TO BE RELEVANT

| Category | Citation of document with indication, where appropriate, of relevant passages | Relevant to claim |
|---|---|---|
| | <u>FR – E – 74 145</u> (HATOT)<br>* Page 5, left-hand column, lines 50 to 61; page 5, right-hand column, lines 1 to 15; figures 14 and 15 *<br>---| 1,4-6, 11,13 |
| | <u>US – A – 2 792 510</u> (DE WOLF)<br>* Column 1, lines 37 to 53; column 3, lines 14 to 75; column 4, lines 1 and 2; column 4, lines 21 to 75; column 5, lines 1 to 25; figures 1,3,5 and 6 *<br>---| 1,4,5, 8,10, 11,13 |
| | <u>FR – E – 68 711</u> (HATOT)<br>* Page 3, left-hand column, lines 2 to 17; figures 1a and 1b *<br>---| 1,6,8, 13 |
| | <u>FR – A – 2 263 632</u> (DAINI)<br>* Page 9, lines 1 to 37; figures 2 to 17 *<br>---| 7,10, 11,12 |
| | <u>US – A – 3 984 972</u> (SUWA)<br>* Column 2, lines 55 to 66; column 4, lines 41 to 45; figures 1 and 6 *<br>---| 8,9,12 |
| A | <u>US – A – 3 768 054</u> (NEUGEBAUER)<br>* Column 2, lines 18 to 25; column 6, lines 62 to 68; column 7, lines 1 to 7; figures 6 and 8 *<br>-----| 2,3 |

**CLASSIFICATION OF THE APPLICATION (Int. Cl.²)**

H 02 K 37/00
G 04 C 13/10
H 02 K 21/18

**TECHNICAL FIELDS SEARCHED (Int.Cl.²)**

H 02 K 37/00
      21/18
      21/14
      21/12
      21/08
      21/06
G 04 C 13/10
      15/00

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 07-12-1978 | TIO |

EPO Form 1503.1  06.78